# EUROPÄISCHE PATENTANMELDUNG

(11) **EP 2 420 802 A2**
(43) Veröffentlichungstag der Anmeldung: **22.02.2012**
(21) Anmeldenummer: 11177671.2
(22) Anmeldetag: 16.08.2011
(51) Int. Cl.: G01D 4/00

(54) **Vorrichtung zum Erfassen von Verbrauchswerten in einem Gebäude anfallender Verbrauchsmengen und Verfahren zum Betrieb der Vorrichtung**

(30) Priorität: 20.08.2010 DE 102010034961
(71) Anmelder: QUNDIS GmbH, 99974 Mühlhausen (DE)
(72) Erfinder: Derbel, Faouzi, 09112 Chemnitz (DE)
(74) Vertreter: Liedtke, Markus

(57) **Zusammenfassung**

Die Erfindung betrifft eine Vorrichtung (1) zum Erfassen von Verbrauchswerten in einem Gebäude anfallender Verbrauchsmengen, umfassend zumindest eine Gruppe (G) bidirektional kommunikationsfähiger Verbrauchswerterfassungseinheiten (2), eine dieser Gruppe (G) zugeordnete bidirektional kommunikationsfähige erste Vertretereinheit (4) und zumindest eine bidirektional kommunikationsfähige Empfangseinheit (3).

Erfindungsgemäß ist die erste Vertretereinheit (4) selbst als eine Einheit mit Verbrauchswerterfassungsfunktionalität ausgebildet und ist zur Erfassung von Verbrauchswerten eingesetzt und bei einer Normalfunktion der Vorrichtung (1) bestehen zumindest zeitweise bidirektionale Kommunikationsverbindungen (K) zwischen der ersten Vertretereinheit (4) und den Verbrauchswerterfassungseinheiten (2) ihrer Gruppe (G) und zumindest zeitweise eine bidirektionale Kommunikationsverbindung (K) zwischen der ersten Vertretereinheit (4) und der Empfangseinheit (3).

Des Weiteren betrifft die Erfindung ein Verfahren zum Betrieb der Vorrichtung (1) und ein Verfahren zur Inbetriebsetzung der Vorrichtung.

## Beschreibung

Die Erfindung betrifft eine Vorrichtung zum Erfassen von Verbrauchswerten in einem Gebäude anfallender Verbrauchsmengen nach den Merkmalen des Oberbegriffs des Anspruchs 1 und ein Verfahren zum Betrieb einer Vorrichtung zum Ablesen von Verbrauchswerten in einem Gebäude anfallender Verbrauchsmengen nach den Merkmalen des Oberbegriffs des Anspruchs 7 sowie ein Verfahren zur Inbetriebsetzung einer Vorrichtung zum Ablesen von Verbrauchswerten in einem Gebäude anfallender Verbrauchsmengen nach den Merkmalen des Oberbegriffs des Anspruchs 12.

Aus dem Stand der Technik ist, wie in der DE 42 35 187 A 1 beschrieben, eine Einrichtung zum Ablesen von Verbrauchswerten in einem Gebäude anfallender Verbrauchsmengen bekannt. Bei dieser Vorrichtung ist eine Funkübertragung der ermittelten Verbrauchswerte von den Verbrauchswert-Erfassungseinrichtungen zu einer lokalen Empfangseinrichtung des Gebäudes vorgesehen, von der aus die Ablesung durch Übermittlung an ein Ablesegerät oder Weiterleitung an eine zentrale Verarbeitungseinrichtung erfolgt. Die Funkübertragung wird unidirektional in einem durch jede Verbrauchswert-Erfassungseinrichtung autonom gesetzten schmalen Zeitfenster jeweils zum Stichtag eines gewünschten Ablesezeitraums ausgeführt.

In der DE 698 02 715 T2 wird ein Fernmessungssystem beschrieben, welches eine Mehrzahl Fernmessgeräte umfasst. Jedes dieser Fernmessgeräte enthält eine Antenne, einen Sender zum Senden von Messsignalen über die Antenne, einen Empfänger, der mit der Antenne verbunden ist, um ein eingehendes Hochfrequenzsignal zu empfangen und zu filtern und einen Trägersignal-Messkreis, der zum Empfangen des gefilterten Hochfrequenzsignals verbunden ist und der betriebsfähig ist, um das Vorhandensein oder das Fehlen eines Trägersignals zu detektieren und um die Aktivierung des Senders in Reaktion auf das Vorhandensein eines Trägersignals zu verhindern oder um den Sender in Reaktion auf das Fehlen des Trägersignals zu aktivieren. Des Weiteren enthält jedes dieser Fernmessgeräte eine Mehrzahl Konzentratoreinheiten, die zur direkten HF-Kommunikation mit entsprechenden Gruppen von Fernmessgeräten angeordnet sind, um jeweilige Messdaten von diesen zu empfangen und eine zentrale Steuereinheit, die zur Kommunikation mit der Mehrzahl Konzentratoreinheiten angeordnet ist, um Messdaten von der Mehrzahl Konzentratoreinheiten zu empfangen. Die Fernmessgeräte sind in einer Messgerätgruppe betriebsfähig, um während entsprechender vorbestimmter Zeitperioden Kommunikation mit der entsprechenden Konzentratoreinheit zu initiieren.

Aus der DE 10 2007 041 938 A1 sind ein Verfahren und eine Anordnung zur Verarbeitung von an räumlich getrennten Erfassungsstellen eines Raumgebiets anfallenden Messdaten bekannt. Es sind an mindestens einer Erfassungsstelle eine Sendeeinrichtung zur vorzugsweise drahtlosen Aussendung eines eine den Messdaten entsprechende Information und vorzugsweise eine die Sendeeinrichtung identifizierende Information enthaltenden Datentelegramms und an mindestens zwei räumlich voneinander getrennten Stellen zum Erfassen und Verarbeiten von Datentelegrammen ausgelegte lokale Empfangsstationen angeordnet. Dabei bilden mindestens zwei lokale Empfangsstationen für mindestens ein von ihnen empfangenes Datentelegramm eine dessen Empfangsqualität darstellende Qualitätsinformation. Es wird jeweils aus von derselben Sendeeinrichtung empfangenen Datentelegrammen nur dasjenige zur Verarbeitung ausgewählt, dessen Qualitätsinformation einem vorgegebenen Kriterium entspricht.

In der DE 101 52 554 A 1 wird ein Datenübermittlungs-Funknetz beschrieben. Bei der drahtlosen Telegrammübermittlung von Daten generierenden, unidirektional kommunizierenden Endgeräten über Primärfunkstrecken und über sich anschließende bidirektional arbeitende Datensammler eines Funknetzes zu einem Daten dokumentierenden Masterdatensammler werden für Primärfunkstrecken von Endgeräten Verteilkriterien in Datensammlern erfasst und abgespeichert. Vom Masterdatensammler erfolgt abhängig von den momentanen Verteilkriterien für jedes Endgerät eine quasi-stationäre Zuordnung zu einem oder nur einem der Datensammler für die sich anschließenden Telegrammübermittlungen periodisch oder ereignisgesteuert eine neue Zuordnung eines Endgerätes wieder zu einem und nur einem eventuell anderen der Datensammler erfolgt. Die Datensammler fungieren auch untereinander als Relaisstationen zur Weiterleitung der Datentelegramme an den Masterdatensammler und sind gegen auf unterschiedlichen Wegen entstehende Telegrammdubletten mit einer Sperre gegen Mehrfachauslesen desselben Datentelegramms ausgestattet.

Aus der US 5,914,672 A ist eine Vorrichtung mit Vertretereinheiten bekannt, welche jeweils mit einer Mehrzahl von Verbrauchswerterfassungseinheiten und mit einer Empfangseinheit kommunizieren.

Der Erfindung liegt die Aufgabe zu Grunde, eine verbesserte Vorrichtung zum Erfassen von Verbrauchswerten in einem Gebäude anfallender Verbrauchsmengen und ein Verfahren zum Betrieb der Vorrichtung sowie ein Verfahren zur Inbetriebsetzung der anzugeben.

Die Aufgabe wird erfindungsgemäß gelöst durch eine Vorrichtung zum Erfassen von Verbrauchswerten in einem Gebäude anfallender Verbrauchsmengen mit den Merkmalen des Anspruchs 1 und ein Verfahren zum Betrieb einer Vorrichtung zum Erfassen von Verbrauchswerten in einem Gebäude anfallender Verbrauchsmengen mit den Merkmalen des Anspruchs 7 sowie ein Verfahren zur Inbetriebsetzung einer Vorrichtung zum Ablesen von Verbrauchswerten in einem Gebäude anfallender Verbrauchsmengen mit den Merkmalen des Anspruchs 12.

Vorteilhafte Ausgestaltungen der Erfindung sind Gegenstand der Unteransprüche.

Eine Vorrichtung zum Erfassen von Verbrauchswerten in einem Gebäude anfallender Verbrauchsmengen umfasst zumindest eine Gruppe bidirektional kommunikationsfähiger Verbrauchswerterfassungseinheiten, eine dieser Gruppe zugeordnete bidirektional kommunikationsfähige erste Vertretereinheit und zumindest eine bidirektional kommunikationsfähige Empfangseinheit.

Erfindungsgemäß ist die erste Vertretereinheit selbst als eine Einheit mit Verbrauchswerterfassungsfunktionalität ausgebildet und ist zur Erfassung von Verbrauchswerten eingesetzt und bei einer Normalfunktion der Vorrichtung bestehen zumindest zeitweise bidirektionale Kommunikationsverbindungen zwischen der ersten Vertretereinheit und den Verbrauchswerterfassungseinheiten ihrer Gruppe und zumindest zeitweise eine bidirektionale Kommunikationsverbindung zwischen der ersten Vertretereinheit und der Empfangseinheit.

Dabei bedeutet Normalfunktion der Vorrichtung, dass keine Störungen, insbesondere keine Kommunikationsstörungen zwischen einzelnen Einheiten der Vorrichtung vorliegen, d. h. dass die während der Normalfunktion genutzten Kommunikationsverbindungen störungsfrei funktionieren.

Die Kommunikationsverbindungen können dabei drahtgebundene oder besonders bevorzugt drahtlose Kommunikationsverbindungen sein, vorzugsweise Funkverbindungen. Unter einer zumindest zeitweise bestehenden Kommunikationsverbindung ist insbesondere bei Funkverbindungen zu verstehen, dass nicht dauerhaft Daten gesendet und empfangen werden. Durch derartige Funkkommunikationsverbindungen bildet die Vorrichtung ein Funkkommunikationsnetzwerk aus, wobei die einzelnen Einheiten der Vorrichtung über die bidirektionalen Kommunikationsverbindungen verbunden sind.

Das Funkkommunikationsnetzwerk bildet sich nach einer Installation der Einheiten der Vorrichtung beispielsweise in einem Gebäude während einer erstmaligen Inbetriebsetzung in einer Inbetriebsetzungsphase automatisch aus. Dazu erfolgen beispielsweise von den Verbrauchswerterfassungseinheiten eine Anmeldung im Funkkommunikationsnetzwerk und eine Synchronisation mit der ersten Vertretereinheit. Des Weiteren erfolgt vorzugsweise eine Synchronisation der ersten Vertretereinheit mit der Empfangseinheit.

Die Verbrauchwertserfassungseinheiten der Vorrichtung sind beispielsweise Heizkostenverteiler, Wasserzähler, Wärmezähler, Gaszähler, Stromzähler und/oder Funkaufsatzmodule auf Zählern.

Vorzugsweise gibt es zur Bildung des Funkkommunikationsnetzwerkes Vorgaben für die ersten Vertretereinheiten, um ungeeignete Verbrauchswerterfassungseinheiten als erste Vertretereinheiten auszuschließen. Diese Vorgaben betreffen zum Beispiel eine vorgegebene Batteriekapazität von beispielsweise mindestens zwei Amperestunden, eine Sende- und/oder Empfangsstärkeermittlung, um eine ausreichende Sende- und/oder Empfangstärke für die Verbindung mit den Verbrauchswerterfassungseinheiten und mit der Empfangseinheit überprüfen und sicherstellen zu können, es muss eine direkte Kommunikationsverbindung zu einer der Empfangseinheiten möglich sein und sie müssen eine ausreichende Speicherkapazität für eine Zwischenspeicherung von Daten der mit ihnen verbundenen Verbrauchswerterfassungseinheiten und für ihre eigenen ermittelten Daten aufweisen. Beispielsweise kommen übliche Heizkostenverteiler aufgrund ihrer begrenzten Ressourcen nicht als erste Vertretereinheiten infrage, da sie zumindest einige dieser Kriterien nicht erfüllen.

Durch die Vorrichtung ist eine automatische Fernauslesung der Verbrauchswerterfassungseinheiten erheblich vereinfacht, die Vorrichtung ist kostengünstiger ausführbar und durch sicherere Kommunikationsverbindungen ist eine Störungsresistenz optimiert. Insbesondere eine Installation der einzelnen Einheiten der Vorrichtung, d. h. der einzelnen Geräte und eine Einbindung in die Vorrichtung, insbesondere in deren Kommunikationsstrukturen, d. h. in deren Kommunikationsnetzwerk ist verbessert und vereinfacht.

Mit der Vorrichtung ist die automatische Fernauslesung der Verbrauchswerterfassungseinheiten kostengünstig und auch ohne ein vertieftes technisches Verständnis über Funktechnologien sowie eine Planung von Funkkommunikationsnetzwerken in Gebäuden durchführbar. Dadurch ist es möglich, einen Kundenprozess bei derartigen Planungen zu vereinfachen und zu optimieren. Ein Vertriebsmitarbeiter kann flexibel ein Angebot für den jeweiligen Kunden erstellen, ohne auf eine genaue Anzahl der kostenintensiven Empfangseinheiten achten zu müssen, d. h. er kann von einem Minimum derartiger Empfangseinheiten ausgehen, da keine direkte Kommunikation aller Verbrauchswerterfassungseinheiten mit den Empfangseinheiten erforderlich ist, sondern nur eine Kommunikation der ersten Vertretereinheiten mit den Empfangseinheiten.

Die einzelnen Verbrauchswerterfassungseinheiten ohne Vertreterfunktionalität können auf diese Weise einen wesentlich größeren Abstand zu den Empfangseinheiten aufweisen. Dadurch sind auch wesentlich weniger dieser kostenintensiven Empfangseinheiten erforderlich, da lediglich die ersten Vertretereinheiten in einer Kommunikationsreichweite der Empfangseinheiten liegen müssen und umgekehrt.

Über die ersten Vertretereinheiten ist die Kommunikationsreichweite erweitert, weil diese als ein Verbindungsglied zwischen den Verbrauchswerterfassungseinheiten und der jeweiligen Empfangseinheit dienen. Die Verbrauchswerterfassungseinheiten können daher wesentlich weiter von den Empfangseinheiten entfernt sein. D. h. bei einer Planung der Vorrichtung beispielsweise für ein Gebäude, in welchem Standorte für die Verbrauchswerterfassungseinheiten aufgrund von Verlegungswegen von Versorgungsleitungen, beispielsweise Strom-, Gas-, Wasser- und/oder Heizungsleitungen bereits festgelegt sind, ist eine Anordnung der Empfangseinheiten derart planbar, dass eine Kommunikationsverbindung lediglich zu den ersten Vertretereinheiten ermöglicht ist, aber keine direkte Kommunikationsverbindung zu jeder einzelnen Verbrauchswerterfassungseinheit erforderlich ist, wie dies aus dem Stand der Technik bekannt ist.

Auf diese Weise sind von den Verbrauchswerterfassungseinheiten empfangene Daten an die Empfangseinheit weiterleitbar, in welcher sie sammelbar und beispielsweise in regelmäßigen Zeitabständen auslesbar sind. Zu diesem Zweck ist die Empfangseinheit zumindest zeitweise über eine

Kommunikationsverbindung mit einer Ausleseeinheit verbunden, zum Beispiel mit einem an der Empfangseinheit vorbei bewegbaren so genannten mobilen Datensammler. Dabei ist von dem Datensammler eine Kommunikationsverbindung aufbaubar, um die Empfangseinheit auszulesen. Dies ist das so genannte Walk-by Verfahren oder Drive-by Verfahren. Der mobile Datensammler ist beispielsweise auch an die Empfangseinheit zur Datenauslesung über eine Drahtverbindung anschließbar.

Alternativ können die Empfangseinheiten beispielsweise auch mit einer als zentrale Empfangseinheit ausgebildeten Ausleseeinheit über eine drahtgebundene oder drahtlose Kommunikationsverbindung verbunden sein, um die Daten beispielsweise an eine Zentrale eines Versorgungsunternehmens zur Auswertung zu übermitteln. Diese zentrale Empfangseinheit ist beispielsweise im oder am Gebäude angeordnet, in welchem die Vorrichtung installiert ist.

Es können alternativ dazu aber beispielsweise auch die Empfangseinheiten als mobile Empfangseinheiten für das Walk-by Verfahren oder Drive-by Verfahren ausgebildet sein, da nicht ständig, sondern nur zeitweise eine bidirektionale Kommunikationsverbindungen zwischen den ersten Vertretereinheiten und den Empfangseinheiten erforderlich ist.

In einer vorteilhaften Ausführungsform umfasst die Vorrichtung eine Mehrzahl von Gruppen von Verbrauchswerterfassungseinheiten. Dabei ist jeder Gruppe eine erste Vertretereinheit zugeordnet. Auf diese Weise ist die Anzahl der Verbrauchswerterfassungseinheiten pro Gruppe, d. h. pro erster Vertretereinheit auf einen vorgegebenen Maximalwert begrenzbar, beispielsweise auf maximal sechzehn Verbrauchswerterfassungseinheiten pro Gruppe. Dadurch ist sichergestellt, dass Ressourcen der ersten Vertretereinheit nicht überlastet sind, dass zum Beispiel eine ausreichende Batteriekapazität und ein ausreichender Speicherplatz zu Verfügung stehen. Des Weiteren werden auf diese Weise die Kommunikationsverbindungen, insbesondere zwischen der ersten Vertretereinheit und der Empfangseinheit nicht überlastet.

Alternativ ist zumindest einer der Gruppen eine erste Vertretereinheit zugeordnet und den verbliebenen anderen Gruppen ist jeweils eine erste Vertretereinheit oder eine bidirektional kommunikationsfähige zweite Vertretereinheit zugeordnet, welche als eine Einheit ohne eine Verbrauchswerterfassungsfunktionalität ausgebildet ist. Auch bei dieser zweiten Vertretereinheit oder bei der Mehrzahl von zweiten Vertretereinheiten bestehen bei einer Normalfunktion der Vorrichtung zumindest zeitweise bidirektionale Kommunikationsverbindungen zwischen der jeweiligen zweiten Vertretereinheit und den Verbrauchswerterfassungseinheiten ihrer Gruppe und zumindest zeitweise eine bidirektionale Kommunikationsverbindung zwischen der jeweiligen zweiten Vertretereinheit und der Empfangseinheit. D. h. die zweiten Vertretereinheiten sind analog zu den ersten Vertretereinheiten ausgebildet und funktional in die Vorrichtung integriert, mit der Ausnahme, dass die ersten Vertretereinheiten als Einheiten mit Verbrauchswerterfassungsfunktionalität und die zweiten Vertretereinheiten als Einheiten ohne Verbrauchswerterfassungsfunktionalität ausgebildet sind. Auf diese Weise ist die Vorrichtung, insbesondere das Funkkommunikationsnetzwerk der Vorrichtung balancierbar und/oder es sind Reaktionszeiten in den Datenkommunikationen reduzierbar. Werden derartige Probleme festgestellt, so sind derartige als Einheiten ohne Verbrauchswerterfassungsfunktionalität ausgebildete zweite Vertretereinheiten zusätzlich installierbar, um eine Anzahl der Vertretereinheiten in der Vorrichtung zu erhöhen und die Verbrauchswerterfassungseinheiten besser auf die Vertretereinheiten zu verteilen.

Zweckmäßigerweise weisen auch die zweiten Vertretereinheiten, analog zu den ersten Vertretereinheiten, eine vorgegebene Batteriekapazität von beispielsweise mindestens zwei Amperestunden, eine Sende- und/oder Empfangsstärkeermittlung, um eine ausreichende Sende- und/oder Empfangstärke für die Verbindung mit den Verbrauchswerterfassungseinheiten und mit der Empfangseinheit überprüfen und sicherstellen zu können, und/oder eine vorgegebene Speicherkapazität für eine Zwischenspeicherung von Daten der mit ihnen verbundenen Verbrauchswerterfassungseinheiten auf. Zudem muss auch hier eine direkte Kommunikationsverbindung zu einer der Empfangseinheiten möglich sein.

Vorzugsweise besteht bei einer Normalfunktion der Vorrichtung zumindest zeitweise eine bidirektionale Kommunikationsverbindung zwischen zumindest einer Vertretereinheit und zumindest einer weiteren Vertretereinheit der Vorrichtung. Auf diese Weise ist eine regelmäßige Synchronisation der Vertretereinheiten untereinander durchführbar, um beispielsweise die von diesen jeweils erfassten Verbrauchswerterfassungseinheiten abzugleichen und beispielsweise Daten der Vertretereinheiten und an die Verbrauchswerterfassungseinheiten zu übermittelnden Daten abzugleichen.

Die Vorrichtung umfasst in einer vorteilhaften Ausführungsform eine Mehrzahl von Empfangseinheiten, wobei jede der Vertretereinheiten jeweils nur einer der Empfangseinheiten zugeordnet ist und bei einer Normalfunktion der Vorrichtung zumindest zeitweise eine bidirektionale Kommunikationsverbindung zwischen den Vertretereinheiten und der jeweiligen Empfangseinheit besteht. Die Anzahl der Empfangseinheiten richtet sich beispielsweise nach der Erreichbarkeit der Vertretereinheiten, d. h. es sind zumindest so viele Empfangseinheiten zu installieren, dass jede Vertretereinheit eine Kommunikationsverbindung zu einer der Empfangseinheiten aufbauen kann.

Zur Inbetriebsetzung der Vorrichtung wird ein erfindungsgemäßes Verfahren zur Inbetriebsetzung durchgeführt, wobei von der ersten Vertretereinheit/den Vertretereinheiten zur Suche einer jeweils geeigneten Empfangseinheit in regelmäßigen Zeitabständen Datentelegramme gesendet werden und/oder von den Verbrauchswerterfassungseinheiten zur Suche einer jeweils geeigneten Vertretereinheit in regelmäßigen Zeitabständen Datentelegramme gesendet werden, um jeweils eine Kommunikationsverbindung für die Normalfunktion und/oder zumindest eine alternative Kommunikationsverbindung zur Verwendung bei einer Störung in der Vorrichtung zu ermitteln.

Vorzugsweise werden die erste Vertretereinheit/die Vertretereinheiten und/oder die Verbrauchswerterfassungseinheiten regelmäßig in einen Empfangsmodus geschaltet, um eine Empfangsbestätigung von der Empfangseinheit/den Empfangseinheiten bzw. von der ersten Vertretereinheit/den Vertretereinheiten zu empfangen.

In der Inbetriebsetzungsphase der Vorrichtung, um das Funkkommunikationsnetzwerk herzustellen, erfolgt dadurch ein regelmäßiges Senden von Datentelegrammen für die Suche der Vertretereinheiten nach den Empfangseinheiten und für die Suche der Verbrauchswerterfassungseinheiten nach den Vertretereinheiten, um jeweils sowohl eine Kommunikationsverbindung für die Normalfunktion und zumindest eine alternative Kommunikationsverbindung zur Verwendung bei einer Störung in der Vorrichtung zu ermitteln. Ebenso schalten die einzelnen Einheiten der Vorrichtung in einen regelmäßigen Empfangsmodus, um eine Bestätigung von den jeweils anderen Einheiten zu erhalten. Natürlich sollten Intervalle für den Sende- und Empfangsmodus unterschiedlich vorgegeben sein, um nicht alle Einheiten der Vorrichtung gleichzeitig in den Sendemodus bzw. in den Empfangsmodus zu schalten. Die Vertretereinheiten können beispielsweise auch während des Betriebes der Vorrichtung in regelmäßigen Abständen in den Empfangsmodus gehen, um neu installierte Verbrauchswerterfassungseinheiten zu übernehmen.

Des Weiteren führen die Vertretereinheiten, um eine ausreichende Flexibilität im Funkkommunikationsnetzwerk der Vorrichtung zu erreichen, zwei voneinander abhängige Kommunikationsprozesse durch, eine regelmäßige Synchronisation mit den Verbrauchswerterfassungseinheiten der jeweiligen Gruppe und eine regelmäßige Synchronisation mit anderen Vertretereinheiten.

In einem Verfahren zum Betrieb einer Vorrichtung zum Erfassen von Verbrauchswerten in einem Gebäude anfallender Verbrauchsmengen wird erfindungsgemäß bei einer Normalfunktion der Vorrichtung zumindest zeitweise eine bidirektionale Datenkommunikation zwischen der Vertretereinheit/den Vertretereinheiten und den ihr/ihnen zugeordneten Verbrauchswerterfassungseinheiten durchgeführt. Durch diese Datenkommunikation mit den Vertretereinheiten ist keine direkte Datenkommunikation jeder einzelnen Verbrauchswerterfassungseinheit mit den Empfangseinheiten erforderlich. Auf diese Weise kann die Vorrichtung wesentlich weniger dieser kostenintensiven Empfangseinheiten aufweisen, da lediglich die Vertretereinheiten in einer Kommunikationsreichweite der Empfangseinheiten liegen müssen und umgekehrt.

Über die Vertretereinheiten wird daher die Kommunikationsreichweite erweitert, weil diese als ein Verbindungsglied zwischen den Verbrauchswerterfassungseinheiten und der jeweiligen Empfangseinheit dienen. Die Verbrauchswerterfassungseinheiten können daher wesentlich weiter von den Empfangseinheiten entfernt sein. D. h. bei einer Planung der Vorrichtung beispielsweise für ein Gebäude, in welchem Standorte für die Verbrauchswerterfassungseinheiten aufgrund von Verlegungswegen von Versorgungsleitungen, beispielsweise Strom-, Gas-, Wasser- und/oder Heizungsleitungen bereits festgelegt sind, kann eine Anordnung der Empfangseinheiten derart geplant werden, dass eine Kommunikationsverbindung lediglich zu den Vertretereinheiten ermöglicht wird, aber keine direkte Kommunikationsverbindung zu jeder einzelnen Verbrauchswerterfassungseinheit erforderlich ist, wie dies aus dem Stand der Technik bekannt ist.

Vorzugsweise wird bei einer Normalfunktion der Vorrichtung zumindest zeitweise eine bidirektionale Datenkommunikation zwischen der ersten Vertretereinheit/den Vertretereinheiten und der der jeweiligen Vertretereinheit zugeordneten Empfangseinheit durchgeführt. Auf diese Weise können von den Verbrauchswerterfassungseinheiten empfangene Daten an die Empfangseinheiten weitergeleitet werden, in welchen sie gesammelt und beispielsweise in regelmäßigen Zeitabständen ausgelesen werden, zum Beispiel mittels eines so genannten mobilen Datensammlers, welcher in der Nähe der jeweiligen Empfangseinheit vorbeibewegt wird, um zu der Empfangseinheit eine Kommunikationsverbindung aufzubauen und diese auszulesen. Dies ist das so genannte Walk-by Verfahren oder Drive-by Verfahren. Der mobile Datensammler kann beispielsweise auch an die Empfangseinheit zur Datenauslesung über eine Drahtverbindung angeschlossen werden.

Alternativ können die Empfangseinheiten beispielsweise auch mit einer zentralen Empfangseinheit über eine drahtgebundene oder drahtlose Kommunikationsverbindung verbunden sein, um die Daten beispielsweise an eine Zentrale eines Versorgungsunternehmens zur Auswertung zu übermitteln. Diese zentrale Empfangseinheit ist beispielsweise im oder am Gebäude angeordnet, in welchem die Vorrichtung installiert ist.

Es können alternativ dazu aber beispielsweise auch die Empfangseinheiten als mobile Empfangseinheiten für das Walk-by Verfahren oder Drive-by Verfahren ausgebildet sein, da ja nicht ständig, sondern nur zeitweise eine bidirektionale Kommunikationsverbindungen zwischen den Vertretereinheiten und den Empfangseinheiten erforderlich ist.

Bei einer Mehrzahl von Vertretereinheiten und bei einer Normalfunktion der Vorrichtung wird vorteilhafterweise zumindest zeitweise eine bidirektionale Datenkommunikation zwischen zumindest einer Vertretereinheit und zumindest einer weiteren Vertretereinheit der Vorrichtung durchgeführt. Auf diese Weise kann eine regelmäßige Synchronisation der Vertretereinheiten untereinander durchgeführt werden, zum Beispiel um die von diesen jeweils erfassten Verbrauchswerterfassungseinheiten abzugleichen und beispielsweise Daten der Vertretereinheiten und an die Verbrauchswerterfassungseinheiten zu übermittelnde Daten abzugleichen.

Bei einer Störung einer der Kommunikationsverbindungen der Vorrichtung wird vorzugsweise versucht, eine alternative bidirektionale Kommunikationsverbindung aufzubauen und über diese zumindest zeitweise die jeweilige bidirektionale Datenkommunikation durchzuführen. Durch diese alternativen Kommunikationsverbindungen wird auch bei Störungen ursprünglicher Kommunikationsverbindungen weiterhin ein Funktionieren der Vorrichtung sichergestellt, wodurch auch weiterhin erfasste Verbrauchswerte von allen Verbrauchswerterfassungseinheiten weitergeleitet werden können.

Besonders bevorzugt ermittelt zu diesem Zweck während einer Inbetriebsetzungsphase der Vorrichtung jede der Verbrauchswerterfassungseinheiten und der Vertretereinheiten zusätzlich zu den normalen bidirektionalen Kommunikationsverbindungen, mittels welchen eine Normalfunktion der Vorrichtung realisierbar ist, jeweils zumindest einen alternativen Kommunikationsweg, d. h. eine alternative bidirektionale Kommunikationsverbindung und speichert diese ab, um im Bedarfsfall, d. h. bei einer Störung, sehr schnell auf diese zurückgreifen zu können und dadurch die Datenkommunikation aufrechtzuerhalten.

Bei einer Störungen der Kommunikationsverbindung zwischen einer der Verbrauchswerterfassungseinheiten und der Vertretereinheit ihrer Gruppe wird zweckmäßigerweise ein regelmäßiges Senden von Datentelegrammen von der jeweiligen Verbrauchswerterfassungseinheit durchgeführt und versucht, zumindest zeitweise eine bidirektionale Kommunikationsverbindung zu einer anderen Verbrauchswerterfassungseinheit ihrer Gruppe aufzubauen, um auf diese Weise über die andere Verbrauchswerterfassungseinheit der Gruppe zumindest zeitweise eine bidirektionale Kommunikationsverbindung mit der Vertretereinheit zu realisieren. Über diese alternative bidirektionale Kommunikationsverbindung wird dann die bidirektionale Datenkommunikation zwischen der Verbrauchswerterfassungseinheit und ihrer Vertretereinheit durchgeführt, bis die direkte bidirektionale Kommunikationsverbindung mit der Vertretereinheit wieder funktioniert.

Wenn dies nicht möglich ist, d. h. wenn von der Verbrauchswerterfassungseinheit keine bidirektionale Kommunikationsverbindung zu einer anderen Verbrauchswerterfassungseinheit der Gruppe aufgebaut werden kann, da beispielsweise eine Kommunikationsverbindungsreichweite nicht ausreicht, wird versucht, eine bidirektionale Kommunikationsverbindung zwischen der Verbrauchswerterfassungseinheit und einer anderen Vertretereinheit oder einer anderen Verbrauchswerterfassungseinheit in einer anderen Gruppe aufzubauen, um auf diese Weise zumindest zeitweise eine bidirektionale Datenkommunikation zwischen der Verbrauchswerterfassungseinheit und direkt oder indirekt über die andere Verbrauchswerterfassungseinheit der anderen Gruppe zu der Vertretereinheit der anderen Gruppe zu realisieren.

Da vorzugsweise zwischen den Vertretereinheiten zumindest zeitweise bidirektionale Kommunikationsverbindungen bestehen, kann auf diese Weise beispielsweise auch eine bidirektionale oder zumindest eine eindirektionale Datenkommunikation zwischen der Verbrauchswerterfassungseinheit und der Vertretereinheit ihrer Gruppe realisiert werden, d. h. es können zumindest die Daten der Verbrauchswerterfassungseinheit an die Vertretereinheit ihrer Gruppe weitergeleitet werden und vorteilhafterweise auch Daten der Vertretereinheit über diese alternative Kommunikationsverbindung an die Verbrauchswerterfassungseinheit weitergeleitet werden.

Bei einer Störungen der Kommunikationsverbindung zwischen einer der Vertretereinheiten und der dieser zugeordneten Empfangseinheit oder einer Störung der Kommunikationsverbindung zwischen der Vertretereinheit und einer anderen Vertretereinheit wird von der jeweiligen Vertretereinheit ebenfalls ein regelmäßiges Senden von Datentelegrammen durchgeführt und versucht, zumindest zeitweise eine bidirektionale Kommunikationsverbindung zu einer anderen Empfangseinheit aufzubauen und über diese eine bidirektionale Datenkommunikation zu realisieren, bis die ursprüngliche Kommunikationsverbindung wieder funktioniert. Wenn dies nicht gelingt, da keine andere Empfangseinheit erreichbar ist, wird versucht, eine bidirektionale Kommunikationsverbindung zu einer anderen Vertretereinheit aufzubauen, um über diese eine bidirektionale Datenkommunikation zu einer Empfangseinheit zu realisieren, bis die ursprüngliche Kommunikationsverbindung wieder funktioniert.

Zweckmäßigerweise wird eine Fehlermeldung generiert, wenn nach einer vorgegebenen Anzahl von Versuchen die Störung der jeweiligen

Kommunikationsverbindung weiterhin besteht und keine alternative Kommunikationsverbindung aufgebaut werden konnte. Dies kann beispielsweise eine optische oder akustische Fehlermeldung sein, so dass Wartungsmaßnahmen zur Behebung der Störung ausgelöst werden können, um möglichst schnell ein störungsfreies Funktionieren der Vorrichtung sicherzustellen.

Ausführungsbeispiele der Erfindung werden im Folgenden anhand von Zeichnungen näher erläutert.

Darin zeigen:
- Figur 1: eine schematische Darstellung eines ersten Ausführungsbeispiels einer Vorrichtung zum Erfassen von Verbrauchswerten in einem Gebäude anfallender Verbrauchsmengen, und
- Figur 2: eine schematische Darstellung eines zweiten Ausführungsbeispiels einer Vorrichtung zum Erfassen von Verbrauchswerten in einem Gebäude anfallender Verbrauchsmengen.

Einander entsprechende Teile sind in allen Figuren mit den gleichen Bezugszeichen versehen.

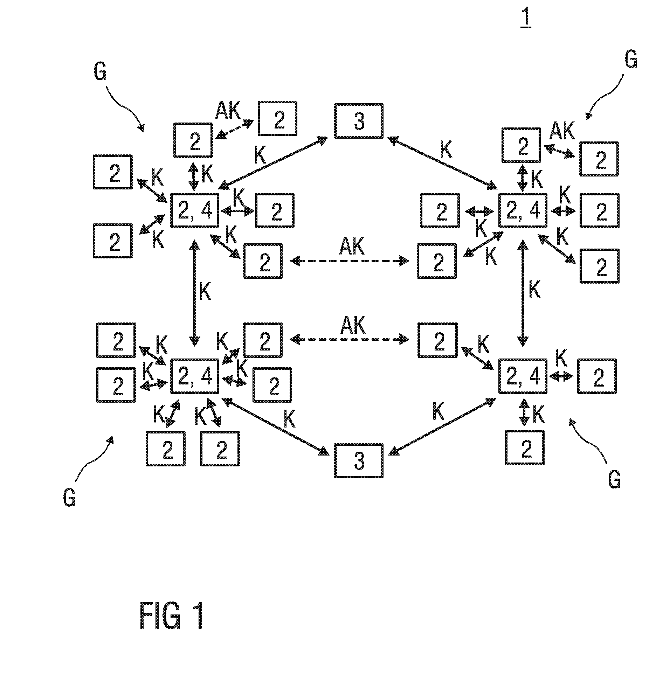

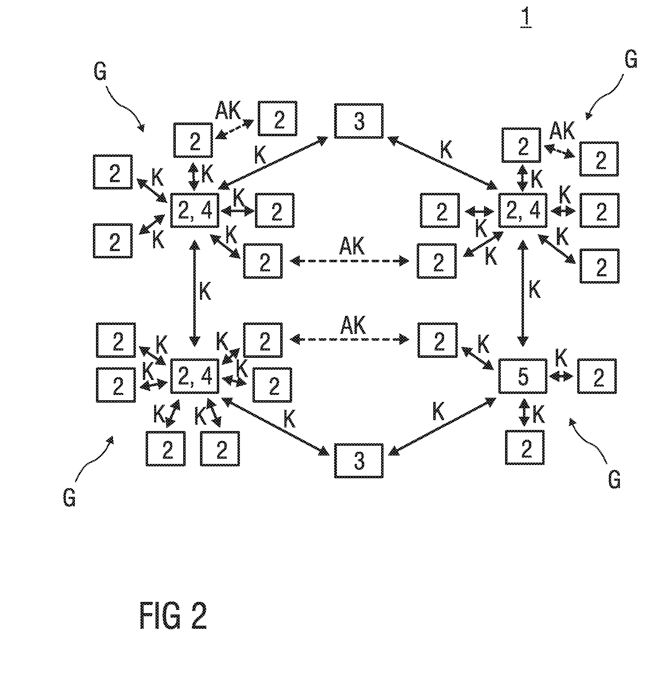

Die Figuren 1 und 2 zeigen schematische Ausführungsbeispiele einer Vorrichtung 1 zum Erfassen von Verbrauchswerten in einem Gebäude anfallender Verbrauchsmengen. Die Vorrichtung 1 umfasst eine Mehrzahl von Verbrauchswerterfassungseinheiten 2 zur Erfassung von Verbrauchswerten anfallender Verbrauchsmengen. Die Verbrauchswerterfassungseinheiten 2, welche in diesem Gebäude installiert sind, beispielsweise in Wohnungen des Gebäudes, sind zum Beispiel Heizkostenverteiler, Wasserzähler, Wärmezähler, Gaszähler, Stromzähler und/oder Funkaufsatzmodule auf Zählern. Die Verbrauchswerterfassungseinheiten 2 sind jeweils bidirektional kommunikationsfähig, d. h. sie weisen jeweils eine Kommunikationseinheit für eine bidirektionale Datenkommunikation auf, vorzugsweise für eine drahtlose Datenkommunikation, insbesondere für eine Funkkommunikation.

Des Weiteren weist die Vorrichtung 1 im hier dargestellten Beispiel zwei Empfangseinheiten 3 auf. Diese Empfangseinheiten 3 sind ebenfalls jeweils bidirektional kommunikationsfähig, d. h. sie weisen analog zu den Verbrauchswerterfassungseinheiten 2 ebenfalls Kommunikationseinheiten für eine bidirektionale Kommunikation auf, welche ebenfalls vorzugsweise für drahtlose Datenkommunikationen ausgebildet sind, insbesondere für Funkkommunikationen. Die Empfangseinheiten 3 sind beispielsweise so genannte Datensammler, welche Daten einer Mehrzahl von Verbrauchswerterfassungseinheiten 2 empfangen, zum Beispiel ermittelte Verbrauchswertdaten, diese optional speichern und beispielsweise an eine zentrale Empfangseinheit 3 im Gebäude oder in der Nähe des Gebäudes weiterleiten, über welche eine Weiterleitung über eine Datenübertragungsverbindung an eine zentrale Verarbeitungseinrichtung erfolgt, um die empfangenen Daten zu verarbeiten, d. h. beispielsweise auszuwerten und ermittelte Verbrauchsmengen abzurechnen.

Alternativ können diese Empfangseinheiten 3 beispielsweise auch vor Ort ausgelesen werden, zum Beispiel in einem so genannten Walk-by-Verfahren oder Drive-By-Verfahren, d. h. durch Ablesepersonen, welche sich mit einem entsprechenden Lesegerät in die Nähe der jeweiligen Empfangseinheit 3 begeben, um zu diesen eine Datenübertragungsverbindung, vorzugsweise drahtlos über Funk oder Infrarot aufzubauen und die in diesen gespeicherten Daten auszulesen.

Zwischen den Empfangseinheiten 3 und den Verbrauchswerterfassungseinheiten 2 ist ein Kommunikationsnetzwerk aus bidirektionalen Kommunikationsverbindungen K gebildet, vorzugsweise ein Funkkommunikationsnetzwerk, in welchem nicht alle Verbrauchswerterfassungseinheiten 2 direkt mit einer der Empfangseinheiten 3 kommunizieren, sondern über Vertretereinheiten 4, 5. Im ersten, in Figur 1 dargestellten Ausführungsbeispiel weist die Vorrichtung 1 lediglich erste Vertretereinheiten 4 auf, wobei jede dieser ersten Vertretereinheiten 4 selbst eine Verbrauchswerterfassungseinheit 2 ist, d. h. als eine Einheit mit einer Verbrauchswerterfassungsfunktionalität ausgebildet ist und auch als eine solche Verbrauchswerterfassungseinheit 2 eingesetzt wird, d. h. sie erfasst selbst Verbrauchswerte.

Wie in Figur 2 dargestellt, kann die Vorrichtung 1 jedoch auch zusätzlich zu einer ersten Vertretereinheit 4 oder, wie in diesem Ausführungsbeispiel, zusätzlich zu mehreren der ersten Vertretereinheiten 4 eine oder mehrere zweite Vertretereinheiten 5 aufweisen, welche jeweils als eine Einheit ohne eine Verbrauchswerterfassungsfunktionalität ausgebildet sind. Im in Figur 2 dargestellten Ausführungsbeispiel weist die Vorrichtung 1 eine derartige zweite Vertretereinheit 5 auf. Selbstverständlich sind die zweiten Vertretereinheiten 5, welche jeweils als eine Einheit ohne eine Verbrauchswerterfassungsfunktionalität ausgebildet sind, d. h. welche keine Verbrauchswerterfassungseinheiten 2 sind, analog zu den Verbrauchswerterfassungseinheiten 2 und Empfangseinheiten 3 und den ersten Vertretereinheiten 4 ebenfalls bidirektional kommunikationsfähig, d. h. sie weisen ebenfalls jeweils eine Kommunikationseinheit für eine bidirektionale Datenkommunikation, insbesondere für eine Funkkommunikation auf.

Des Weiteren gibt es weitere Vorgaben für die Vertretereinheiten 4, 5, zum Beispiel eine vorgegebene Batteriekapazität von beispielsweise mindestens zwei Amperestunden, eine Sende- und/oder Empfangsstärkeermittlung, es muss eine direkte Kommunikationsverbindung K zu einer der Empfangseinheiten 3 möglich sein und sie müssen eine ausreichende Speicherkapazität für eine Zwischenspeicherung der Daten der mit ihnen verbundenen Verbrauchswerterfassungseinheiten 2 und gegebenenfalls ihrer eigenen ermittelten Daten aufweisen. Beispielsweise kommen übliche Heizkostenverteiler aufgrund ihrer begrenzten Ressourcen nicht als erste Vertretereinheiten 4 infrage, da sie zumindest einige dieser Kriterien nicht erfüllen.

Die Vorrichtung 1 in beiden Ausführungsbeispielen weist vier Vertretereinheiten 4, 5 auf, d. h. im ersten, in Figur 1 dargestellten Ausführungsbeispiel vier erste Vertretereinheiten 4 und im zweiten, in Figur 2 dargestellten Ausführungsbeispiel drei erste Vertretereinheiten 4 und eine zweite Vertretereinheit 5. Die Verbrauchswerterfassungseinheiten 2 sind bei einer Normalfunktion der Vorrichtung 1 jeweils mit einer Vertretereinheit 4, 5 zumindest zeitweise über eine bidirektionale Kommunikationsverbindung K verbunden, so dass vier Gruppen G gebildet sind, welche jeweils eine Vertretereinheit 4, 5 und eine Mehrzahl mit dieser über eine bidirektionale Kommunikationsverbindung K zumindest zeitweise verbundener Verbrauchswerterfassungseinheiten 2 aufweisen. Nur die Vertretereinheiten 4, 5 kommunizieren mit den Empfangseinheiten 3, die Verbrauchswerterfassungseinheiten 2 ohne Vertreterfunktion nicht.

Auch für eine Bildung der Gruppen G gibt es sinnvollerweise Vorgaben, um eine Überlastung einzelner Vertretereinheiten 4, 5 zu vermeiden. So darf eine Gruppe G nur eine vorgegebene maximale Anzahl von Verbrauchswerterfassungseinheiten 2 umfassen, beispielsweise maximal sechzehn Verbrauchswerterfassungseinheiten 2. D. h. jede Vertretereinheit 4, 5 übernimmt die Vertreterfunktion maximal für sechzehn Verbrauchswerterfassungseinheiten 2.

Die Verbrauchswerterfassungseinheiten 2 können dabei jeweils direkt mit der jeweiligen Vertretereinheit 4, 5 oder über eine andere Verbrauchswerterfassungseinheit 2 der Gruppe G mit der Vertretereinheit 4, 5 über eine bidirektionale Kommunikationsverbindung K verbunden sein. Bei einer Normalfunktion der Vorrichtung 1 sollten die Verbrauchswerterfassungseinheiten 2 jedoch direkt mit der Vertretereinheit 4, 5 der jeweiligen Gruppe G kommunikativ verbunden sein. Die Vertretereinheiten 4, 5 sind untereinander über eine bidirektionale Kommunikationsverbindung K zumindest zeitweise verbunden, so dass eine regelmäßige Synchronisation der Vertretereinheiten 4, 5 untereinander ermöglicht ist.

Vorzugsweise bildet eine Inbetriebnahme einen Auslöser zur erstmaligen Bildung des Kommunikationsnetzwerkes, d. h. zur Herstellung der bidirektionalen Kommunikationsverbindungen K, zum Beispiel durch Inbetriebnahme aller Einheiten 2, 3, 4, 5 der Vorrichtung 1. Daraufhin erfolgt eine Anmeldung aller Einheiten 2, 3, 4, 5 im Kommunikationsnetzwerk und eine Synchronisation der Einheiten 2, 3, 4, 5 untereinander, insbesondere eine Synchronisation der Verbrauchswerterfassungseinheiten 2 mit der jeweiligen Vertretereinheit 4, 5. Geräte, welche die Vertreterfunktionalität übernehmen, werden dabei vorzugsweise bereits vor der Bildung des Kommunikationsnetzwerkes vorgegeben. Wird dem Kommunikationsnetzwerk lediglich eine neue Verbrauchswerterfassungseinheit 2 hinzugefügt, so meldet diese sich beispielsweise nach ihrer Inbetriebnahme im Kommunikationsnetzwerk an und synchronisiert sich direkt oder über eine andere Verbrauchswerterfassungseinheit 2 mit einer Vertretereinheit 4, 5.

Vorzugsweise ermittelt jede der Einheiten 2, 3, 4, 5 des Kommunikationsnetzwerkes, insbesondere die Verbrauchswerterfassungseinheiten 2 und Vertretereinheiten 4, 5, während dessen erstmaliger Bildung des Weiteren einen alternativen Kommunikationsweg zur Kommunikation mit den Empfangseinheiten 3, um auch bei einzelnen auftretenden Kommunikationsstörungen, beispielsweise einzelnen Verbindungsabbrüchen aufgrund von Störeinflüssen auf die Funkkommunikation, weiterhin eine sichere Gesamtfunktion der Vorrichtung 1 sicherzustellen.

Sollten sich beispielsweise während dieser erstmaligen Bildung des Kommunikationsnetzwerkes oder während eines späteren ständigen Betriebes der Vorrichtung 1 Probleme beispielsweise aufgrund einer zu geringen Anzahl von Vertretereinheiten 4, 5 herausstellen, so dass zum Beispiel zu lange Reaktionszeiten auftreten oder einzelne Verbrauchswerterfassungseinheiten 2 keine Vertretereinheit 4, 5 finden oder die Kommunikation im Kommunikationsnetzwerk extrem ungleich verteilt ist, so dass einzelne Kommunikationsverbindungen K überlastet sind, so kann die Vorrichtung 1 beispielsweise mit zusätzlichen, als Einheit ohne eine Verbrauchswerterfassungsfunktionalität ausgebildeten zweiten Vertretereinheiten 5 erweitert werden, um eine Balancierung des Kommunikationsnetzwerkes und/oder eine Verringerung der Reaktionszeiten zu erreichen. Diese zusätzlichen, als Einheiten ohne eine Verbrauchswerterfassungsfunktionalität ausgebildeten zweiten Vertretereinheiten 5 übernehmen zweckmäßigerweise die Vertreterfunktion für einzelne Verbrauchswerterfassungseinheiten 2 des Kommunikationsnetzwerkes, d. h. sie werden als zusätzliche Vertreter in das Kommunikationsnetzwerk eingebunden.

Während der Inbetriebsetzungsphase, d. h. während der erstmaligen Bildung des Kommunikationsnetzwerkes erfolgt eine regelmäßige Sendung von Datentelegrammen aller Einheiten 2, 3, 4, 5 für die Suche der Verbrauchswerterfassungseinheiten 2 nach Vertretereinheiten 4, 5 und anderen Verbrauchswerterfassungseinheiten 2 und die Suche der Vertretereinheiten 4, 5 nach Empfangseinheiten 3 und anderen Vertretereinheiten 4, 5. Ebenso schalten alle Einheiten 2, 3, 4, 5 regelmäßig in einen Empfangsmodus zur Suche nach Bestätigungen der anderen Einheiten 2, 3, 4, 5, welche die Datentelegramme empfangen haben und darauf antworten. Selbstverständlich ist dies so aufeinander abzustimmen, dass nicht alle Einheiten 2, 3, 4, 5 gleichzeitig in den Sendemodus bzw. in den Empfangsmodus schalten. Daher sind den einzelnen Einheiten 2, 3, 4, 5 vorzugsweise Zeitpunkte, Zeiträume und/oder eine Wechselfrequenz zum Wechsel vom Sendemodus in den Empfangsmodus vorgegeben.

Um eine ausreichende Flexibilität im Kommunikationsnetzwerk zu erreichen, führen die Vertretereinheiten 4, 5 zwei voneinander abhängige Kommunikationsprozesse durch, eine regelmäßige Synchronisation mit den Verbrauchswerterfassungseinheiten 2 in der jeweiligen Gruppe G und eine regelmäßige Synchronisation mit den jeweils anderen Vertretereinheiten 4, 5.

Bei einer Normalfunktion der Vorrichtung 1 kommunizieren nach vollständiger Bildung des Kommunikationsnetzwerkes die Verbrauchswerterfassungseinheiten 2 direkt mit der Vertretereinheit 4, 5 ihrer Gruppe G über die jeweilige bidirektionale Kommunikationsverbindung K. Die Vertretereinheiten 4, 5 kommunizieren untereinander und mit den Empfangseinheiten 3.

Mittels des Verfahrens zum Betrieb der Vorrichtung 1 kann jedoch auf auftretende Kommunikationsstörungen im Kommunikationsnetzwerk reagiert werden, um alternative Kommunikationswege über alternative Kommunikationsverbindungen AK zu nutzen. In der Figur 1 und der Figur 2 sind die Kommunikationsverbindungen K bei einer Normalfunktion der Vorrichtung 1 mittels durchgezogener Pfeile dargestellt und beispielhaft einige der möglichen alternativen Kommunikationsverbindungen AK für den Fall einer Störung einer der normalen Kommunikationsverbindungen K durch gestrichelte Pfeile dargestellt.

Bei Störungen in der Kommunikationsverbindung K zwischen einer Verbrauchswerterfassungseinheit 2 und ihrer Vertretereinheit 4, 5 erfolgt ein regelmäßiges Senden von Datentelegrammen von der jeweiligen Verbrauchswerterfassungseinheit 2 und die Suche nach einer anderen Verbrauchswerterfassungseinheit 2 der Gruppe G, welche mit der Vertretereinheit 4, 5 kommunizieren kann, um zu dieser eine alternative Kommunikationsverbindung AK aufzubauen und auf diese Weise über die andere Verbrauchswerterfassungseinheit 2 der Gruppe G mit der Vertretereinheit 4, 5 zu kommunizieren, bis die direkte Kommunikationsverbindung K mit der Vertretereinheit 4, 5 wieder funktioniert.

Wenn keine solche andere Verbrauchswerterfassungseinheit 2 gefunden wird, zu der eine alternative Kommunikationsverbindung AK aufgebaut werden kann, wird von der Verbrauchswerterfassungseinheit 2 nach einer anderen Vertretereinheit 4, 5 oder nach einer Verbrauchswerterfassungseinheit 2 in einer anderen Gruppe G gesucht, um auf diese Weise die Daten an die andere Vertretereinheit 4, 5 weiterzuleiten. Da die Vertretereinheiten 4, 5 untereinander auch in Kommunikationsverbindung K stehen, können diese Daten dann beispielsweise auch an die ursprüngliche Vertretereinheit 4, 5 der Verbrauchswerterfassungseinheit 2 weitergeleitet werden. Wenn auch dies nach mehrmaligen Versuchen nicht funktioniert, wird eine Fehlermeldung generiert. Dies kann beispielsweise eine optische oder akustische Fehlermeldung sein, so dass Wartungsmaßnahmen ausgelöst werden können.

Treten Störungen in der Kommunikationsverbindung K einer Vertretereinheit 4, 5 zu einer Empfangseinheit 3 oder einer anderen Vertretereinheit 4, 5 auf, erfolgt von der jeweiligen Vertretereinheit 4, 5 ebenfalls ein regelmäßiges Senden von Datentelegrammen. Wenn eine andere Empfangseinheit 3 vorhanden und erreichbar ist, wird eine alternative Kommunikationsverbindung AK von der Vertretereinheit 4, 5 direkt zu dieser anderen Empfangseinheit 3 aufgebaut. Wenn für die Vertretereinheit 4, 5 keine Empfangseinheit 3 direkt erreichbar ist, wird eine andere Vertretereinheit 4, 5 gesucht, um über diese andere Vertretereinheit 4, 5 mit einer Empfangseinheit 3 zu kommunizieren, bis die ursprüngliche Kommunikationsverbindung K wieder zur Verfügung steht. Wenn auch dies nach mehrmaligen Versuchen nicht funktioniert, wird eine Fehlermeldung generiert. Dies kann beispielsweise eine optische oder akustische Fehlermeldung sein, so dass Wartungsmaßnahmen ausgelöst werden können.

Durch die Vorrichtung 1 und das Verfahren zu deren Betrieb wird eine automatische Fernauslesung der Verbrauchswerterfassungseinheiten 2 erheblich vereinfacht, die Vorrichtung 1 ist kostengünstiger ausführbar und durch sicherere Kommunikationsverbindungen K, AK eine Störungsresistenz optimiert. Insbesondere die Installation der einzelnen Einheiten 2, 3, 4, 5 der Vorrichtung 1 und die Einbindung in das Kommunikationsnetzwerk ist verbessert und vereinfacht.

Mit der Vorrichtung 1 und dem Verfahren kann die automatische Fernauslesung der Verbrauchswerterfassungseinheiten 2 kostengünstig und auch ohne ein vertieftes technisches Verständnis über Funktechnologien sowie die Planung von Funkkommunikationsnetzwerken in Gebäuden durchgeführt werden. Dadurch ist es möglich, einen Kundenprozess bei derartigen Planungen zu vereinfachen und zu optimieren. Ein Vertriebsmitarbeiter kann flexibel ein Angebot für den jeweiligen Kunden erstellen, ohne auf eine genaue Anzahl der kostenintensiven Empfangseinheiten 3 achten zu müssen, d. h. er kann von einem Minimum derartiger Empfangseinheiten 3 ausgehen, da keine direkte Kommunikation aller Verbrauchswerterfassungseinheiten 2 mit den Empfangseinheiten 3 erforderlich ist, sondern nur eine Kommunikation der Vertretereinheiten 4, 5 mit den Empfangseinheiten 3. Die einzelnen Verbrauchswerterfassungseinheiten 2 ohne Vertreterfunktionalität können auf diese Weise einen wesentlich größeren Abstand zu den Empfangseinheiten 3 aufweisen. Die Empfangseinheiten 3 können dabei auch als mobile Empfangseinheiten 3 ausgebildet sein, mittels welchen die sogenannte Walk-by Auslesung oder Drive-by Auslesung der Vertretereinheiten 4, 5 durchgeführt wird.

### BEZUGSZEICHENLISTE

- 1: Vorrichtung
- 2: Verbrauchswerterfassungseinheit
- 3: Empfangseinheit
- 4: erste Vertretereinheit
- 5: zweite Vertretereinheit

- AK: alternative Kommunikationsverbindung
- G: Gruppe
- K: Kommunikationsverbindung

## Patentansprüche

1. Vorrichtung (1) zum Erfassen von Verbrauchswerten in einem Gebäude anfallender Verbrauchsmengen, umfassend zumindest eine Gruppe (G) bidirektional kommunikationsfähiger Verbrauchswerterfassungseinheiten (2), eine dieser Gruppe (G) zugeordnete bidirektional kommunikationsfähige erste Vertretereinheit (4) und zumindest eine bidirektional kommunikationsfähige Empfangseinheit (3),
**dadurch gekennzeichnet, dass** die erste Vertretereinheit (4) selbst als eine Einheit mit Verbrauchswerterfassungsfunktionalität ausgebildet ist und zur Erfassung von Verbrauchswerten eingesetzt ist und dass bei einer Normalfunktion der Vorrichtung (1) zumindest zeitweise bidirektionale Kommunikationsverbindungen (K) zwischen der ersten Vertretereinheit (4) und den Verbrauchswerterfassungseinheiten (2) ihrer Gruppe (G) bestehen und zumindest zeitweise eine bidirektionale Kommunikationsverbindung (K) zwischen der ersten Vertretereinheit (4) und der Empfangseinheit (3) besteht.

2. Vorrichtung (1) nach Anspruch 1,
umfassend eine Mehrzahl von Gruppen (G) von Verbrauchswerterfassungseinheiten (2), wobei zumindest einer der Gruppen (G) eine erste Vertretereinheit (4) zugeordnet ist und den verbliebenen anderen Gruppen (G) jeweils eine erste Vertretereinheit (4) oder eine bidirektional kommunikationsfähige zweite Vertretereinheit (5) zugeordnet ist, welche als eine Einheit ohne eine Verbrauchswerterfassungsfunktionalität ausgebildet ist und bei welcher bei einer Normalfunktion der Vorrichtung (1) zumindest zeitweise bidirektionale Kommunikationsverbindungen (K) zwischen der jeweiligen zweiten Vertretereinheit (5) und den Verbrauchswerterfassungseinheiten (2) ihrer Gruppe (G) bestehen und zumindest zeitweise eine bidirektionale Kommunikationsverbindung (K) zwischen der jeweiligen zweiten Vertretereinheit (5) und der Empfangseinheit (3) besteht.

3. Vorrichtung (1) nach Anspruch 2,
**dadurch gekennzeichnet, dass** bei einer Normalfunktion der Vorrichtung (1) zumindest zeitweise eine bidirektionale Kommunikationsverbindung (K) zwischen zumindest einer Vertretereinheit (4, 5) und zumindest einer weiteren Vertretereinheit (4, 5) der Vorrichtung (1) besteht.

4. Vorrichtung (1) nach einem der Ansprüche 2 oder 3,
umfassend eine Mehrzahl von Empfangseinheiten (3), wobei jede der Vertretereinheiten (4, 5) jeweils nur einer der Empfangseinheiten (3) zugeordnet ist und bei einer Normalfunktion der Vorrichtung (1) zumindest zeitweise eine bidirektionale Kommunikationsverbindung (K) zwischen den Vertretereinheiten (4, 5) und der jeweiligen Empfangseinheit (3) besteht.

5. Vorrichtung (1) nach einem der vorhergehenden Ansprüche,
**dadurch gekennzeichnet, dass** die erste Vertretereinheit/Vertretereinheiten (4) und/oder die zweite Vertretereinheit/Vertretereinheiten (5) eine vorgegebene Batteriekapazität, eine Sende- und/oder Empfangsstärkeermittlung und/oder eine vorgegebene Speicherkapazität aufweist/aufweisen.

6. Vorrichtung (1) nach einem der vorhergehenden Ansprüche,
**dadurch gekennzeichnet, dass** die Empfangseinheit/Empfangseinheiten (3) zumindest zeitweise über eine Kommunikationsverbindung mit einer Ausleseeinheit verbunden ist/sind.

7. Verfahren zum Betrieb einer Vorrichtung (1) zum Erfassen von Verbrauchswerten in einem Gebäude anfallender Verbrauchsmengen nach einem der Ansprüche 1 bis 6, **dadurch gekennzeichnet, dass** bei einer Normalfunktion der Vorrichtung (1) zumindest zeitweise eine bidirektionale Datenkommunikation zwischen der ersten Vertretereinheit (4)/den Vertretereinheiten (4, 5) und den ihr/ihnen zugeordneten Verbrauchswerterfassungseinheiten (2) durchgeführt wird.

8. Verfahren nach Anspruch 7,
**dadurch gekennzeichnet, dass** bei einer Normalfunktion der Vorrichtung (1) zumindest zeitweise eine bidirektionale Datenkommunikation zwischen der ersten Vertretereinheit (4)/den Vertretereinheiten (4, 5) und der der jeweiligen Vertretereinheit (4, 5) zugeordneten Empfangseinheit (3) durchgeführt wird.

9. Verfahren nach Anspruch 7 oder 8,
**dadurch gekennzeichnet, dass** bei einer Mehrzahl von Vertretereinheiten (4, 5) und bei einer Normalfunktion der Vorrichtung (1) zumindest zeitweise eine bidirektionale Datenkommunikation zwischen zumindest einer Vertretereinheit (4, 5) und zumindest einer weiteren Vertretereinheit (4, 5) der Vorrichtung (1) durchgeführt wird.

10. Verfahren nach einem der Ansprüche 7 bis 9,
**dadurch gekennzeichnet, dass** bei einer Störung einer der Kommunikationsverbindungen (K) der Vorrichtung (1) versucht wird, eine alternative bidirektionale Kommunikationsverbindung (AK) aufzubauen und über diese die jeweilige zumindest zeitweise Datenkommunikation durchzuführen.

11. Verfahren nach Anspruch 10,
**dadurch gekennzeichnet, dass** eine Fehlermeldung generiert wird, wenn nach einer vorgegebenen Anzahl von Versuchen die Störung der jeweiligen Kommunikationsverbindung (K) weiterhin besteht und keine alternative Kommunikationsverbindung (AK) aufgebaut werden konnte.

12. Verfahren zur Inbetriebsetzung einer Vorrichtung (1) zum Erfassen von Verbrauchswerten in einem Gebäude anfallender Verbrauchsmengen nach einem der Ansprüche 1 bis 6,
**dadurch gekennzeichnet, dass** von der ersten Vertretereinheit (4)/den Vertretereinheiten (4, 5) zur Suche einer jeweils geeigneten Empfangseinheit (3) in regelmäßigen Zeitabständen Datentelegramme gesendet werden und/oder dass von den Verbrauchswerterfassungseinheiten (2) zur Suche einer jeweils geeigneten Vertretereinheit (4, 5) in regelmäßigen Zeitabständen Datentelegramme gesendet werden, um jeweils eine Kommunikationsverbindung (K) für die Normalfunktion und/oder zumindest eine alternative Kommunikationsverbindung (AK) zur Verwendung bei einer Störung in der Vorrichtung (1) zu ermitteln.

13. Verfahren nach Anspruch 12,
**dadurch gekennzeichnet, dass** die erste Vertretereinheit (4)/die Vertretereinheiten (4, 5) und/oder die Verbrauchswerterfassungseinheiten (2) regelmäßig in einen Empfangsmodus geschaltet werden, um eine Empfangsbestätigung von der Empfangseinheit (3)/den Empfangseinheiten (3) bzw. von der ersten Vertretereinheit (4)/den Vertretereinheiten (4, 5) zu empfangen.
